# EUROPEAN PATENT SPECIFICATION

(11) **EP 1 242 359 B1**
(45) Date of publication and mention of the grant of the patent: **12.04.2006**
(21) Application number: 01934264.1
(22) Date of filing: 08.06.2001
(51) Int. Cl.: C07C 211/08, C07C 17/16, C08K 9/04, C01B 33/44

(54) **INTERCALATED CLAY MATERIAL USEFUL FOR MAKING ALPHA-OLEFIN POLYMER NANOCOMPOSITES AND INTERCALANT COMPOUND USED THEREIN**
INTERKALIERTE TONERDE ZUR HERSTELLUNG VON NANOKOMPOSITEN MIT ALPHA-OLEFIN POLYMEREN UND DIE VERWENDETEN INTERKALATIONSVERBINDUNGEN
MATIERE ARGILEUSE INTERCALEE UTILE POUR LA PRODUCTION DE NANOCOMPOSITES A BASE DE POLYMERE D'ALPHA-OLEFINE ET COMPOSE INTERCALANT UTILISE DANS LADITE MATIERE

(30) Priority: 16.06.2000 US 596091; 16.06.2000 US 596090
(43) Date of publication of application: 25.09.2002
(73) Proprietor: Basell Poliolefine Italia S.r.l., 20124 Milano (IT)
(72) Inventor: BISHOP, C., Edward, Hockessin, DE 19707 (US); NIYOGI, Suhas, G., Hockessin, DE 19707 (US)
(74) Representative: Colucci, Giuseppe
(86) International application number: PCT/IB2001/001019
(87) International publication number: WO 2001/096237

(56) References cited:
- EP-A- 0 541 037
- WO-A-97/43274
- WO-A-99/20722
- DE-A- 3 145 455
- US-A- 4 310 547
- US-A- 5 552 469
- US-A- 5 760 121
- US-A- 5 910 523
- MANCUSO, CAROL A. ET AL: "C15, C20, and C25 isoprenoid homologs in glycerol diether phospholipids of methanogenic archaebacteria" J. LIPID RES. (1985), 26(9), 1120-5 , XP001053183
- A.K. SEN GUPTA; H. PETERS: "Isolierung und Strukturaufklärung polyverzweigter Fettsäuren aus Fischöl" FETTE, SEIFEN, ANSTRICHMITTEL., vol. 68, no. 5, 1966, pages 349-360, XP002188564 INDUSTRIEVERLAG VON HERNHAUSSEN KG. HAMBURG., DE
- PATENT ABSTRACTS OF JAPAN vol. 009, no. 196 (C-297), 13 August 1985 (1985-08-13) -& JP 60 067425 A (NISSHIN SEIFUN KK;OTHERS: 01), 17 April 1985 (1985-04-17)
- NAGAHAMA, NOBORU ET AL: "An antibiotic, albocycline. V. High pressure-high temperature hydrogenation products, and structure proof of albocycline" CHEM. PHARM. BULL. (1971), 19(4), 660-6 , XP001053213
- ANDO, YASUHIRO ET AL: "Stereospecific analysis of fish oil triacyl-sn-glycerols" J. AM. OIL CHEM. SOC. (1992), 69(5), 417-24 , XP002188565
- J. CASON ET AL. : "Location of a branch in a saturated carbon chain" TETRAHEDRON., vol. 7, 1959, pages 289-298, XP002188566 ELSEVIER SCIENCE PUBLISHERS, AMSTERDAM., NL ISSN: 0040-4020

## Description

### FIELD OF THE INVENTION

The present invention relates to intercalant compounds comprising a saturated isoprene oligomer bonded to a polar group; these compounds are useful in the intercalation and exfoliation of clays, the particles of which are water swellable. Moreover, the invention relates to alpha-olefin polymer nanocomposites comprising the exfoliated particles of clay.

### BACKGROUND OF THE INVENTION

Clays are silicate minerals, the particles of which have equivalent spherical diameters of less than 2 µm. For many years clay has been used in polymer compositions to enhance or impart toughness, heat deflection temperature, oxygen barrier and optical properties of or to the compositions. Such use has led to the development of nanocomposites. These are compositions that comprise a normally solid, polymer material and, highly dispersed in the matrices of the polymer material, diminuted clay particles. These particles are in the form of platelets, the thickness of which is measured in nanometers. Clay particles of such fineness are obtained from water swellable clays which include crystalline clays that belong to the class of layer silicates, also referred to as phyllosilicates. The phyllosilicates include the smectite (e.g., sodium and calcium montmorillonite), mica and vermiculite groups of clays. The particles of these minerals are formed by layers or laminates of crystalline silicate platelets. The layers are strongly held together by electrochemical attraction. When these minerals are exposed to water, it diffuses into the particles between the layers, and causes the layers to move apart (as evidenced by expansion or swelling of the particles), whereby the layers are not as strongly held together. When these minerals are subjected to drying conditions, the water between the layers escapes and evaporates, and the particles shrink.

One method of obtaining the clay particles is based on this water swelling effect. In the method, an aqueous solution or dispersion of an organoelectrolyte, and water swellable clay such as a phyllosilicate are admixed. The solution or dispersion migrates into the phyllosilicate particles between the layers, and forces the layers apart. Water is evaporated from the particles. However, because of the electrolytic portion of the organoelectrolyte, it remains between the layers of silicate platelets, and because of the bulk of the organo-portion, the layers remain spaced apart. The resulting swollen particles are described as intercalated, and the organoelectrolyte is referred as the intercalant compound. In such condition substantially less shear is needed to separate the platelet layers from each other. Sufficient shear is applied to the intercalated particles to overcome the forces holding the layers together, and delaminate them, whereby diminuted clay particles are obtained. Such particles are referred to as exfoliated clay particles. In most instances, the shear involved in the melt blending of the polymer material and the intercalated, phyllosilicate particles is sufficient to exfoliate the particles.

In the prior art, many patents and publications relate to nanocomposites, how to make them, and the preparation of intercalated clays for making nanocomposites. For instance, US 5,552,469 to Beall et al. discloses nanocomposites in which the polymer matrix can be a homopolymer (such as polyethylene or polypropylene) or a copolymer (such as ethylene/propylene copolymers and ethylene/propylene/diene terpolymers). The clay disclosed in the patent is a phyllosilicate such as a smectite clay and the intercalant compound disclosed in the patent includes an oligomer with carbonyl, hydroxyl, carboxyl, amine and/or ether functionalities.

US 5,760,121 discloses a composite material comprising a host material, such as a polyamide, polyvinylamine, polyethylene terephthalate, polyolefin, or polyacrylate, and exfoliated platelets of a phyllosilicate material. The platelets are derived from an intercalate formed by contacting a phyllosilicate with an intercalant polymer-containing composition, in the presence of water or an organic solvent. Suitable intercalant polymers include polyolefins and acrylic polymers.

US 5,910,523 discloses a composition comprising (a) a semi-crystalline polyolefin, (b) a clay filler having dispersible platelets in stacks, (c) an amino-functional silane reacted with the filler, and (d) a carboxylated or maleated semi-crystalline polyolefin that has been reacted with the amino-functional silane after the silane was reacted with the filler.

Incorporating clay minerals into a polymer matrix, however, does not always result in markedly improved mechanical properties. This may be due in part to the inability to exfoliate all or at least a substantial portion of the layers of the silicate material. It may also be due in part to the lack of affinity between the layered silicate materials and the organic polymers. Attempts to overcome these problems have not been totally successful. There is therefore a need for novel nanocomposite materials that have desirable mechanical and physical properties.

Oligomeric derivatives of isoprene are known in the art; for instance, JP 62-298561 discloses a class of synthetic lipids containing at least one chain-type, terpene structure hydrocarbon group. Among various compounds, 1-bromo-3,7,11,15-tetramethylhexadecane and N,N-dimethyl-3,7,11,15-tetramethylhexadecylamine are mentioned. Said lipids are dispersed in water by ultrasound and heat treatment to form bilayer films, useful in the fields of biochemistry and pharmacology. JP 62-298561 does not mention or suggest the use of said synthetic lipids in intercalated clays for the production of nanocomposites.

Other oligomeric derivatives of isoprene are described in Mancuso Carol A. et al., "J.Lipid Res.", (1985), 26(9), 1120-5; A.K.Sen Gupta, H. Peters, "Fette, Seifen, Anstrichmittel.", Vol. 68, no.5, (1966), pages 349-360, Industrieverlag von Hernhaussen KG., Hamburg, DE; patent abstract from Japan vol.009, no. 196 (C-297), (13.08.1985)-& JP 60 067425 A (Nisshin Seifun KK; et al.), (17.04.1985); US 4 310 547; DE 31 45 455 A; Nagama Noboru et al., "Chem. Pharm. Bull.", (1971), 19(4), 660-6; WO 97 43274; EP 541 037 A; Ando Yasuhiro et al., "J. Am. Oil Chem. Soc.", (1992), 69(5), 417-24; J. Cason et al., "Tetrahedron.", vol.7, 1959, pages 289-298; WO 99 20722. None of the documents mentions the use of the described derivatives of isoprene as intercalant for clays.

### SUMMARY OF THE INVENTION

An object of the present invention is a clay material intercalated with at least one intercalant compound having formula (Ib): 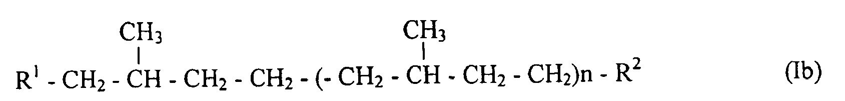 wherein R¹ is H or a linear or branched C₁-C₄ alkyl, n is 2-17, and R² is a radical selected from the group consisting of X, COOR³, CN, NR₂, and NR₂·HX, wherein R³ is R, NR₂, NR₂·HX or a monovalent metal cation, the R groups, the same or different from each other, being H or a linear or branched C₁-C₄ alkyl and X being F, Cl, Br or I. In the compound of formula (Ib), the nonpolar portion for the most part is a saturated oligomer of isoprene. It resembles or mimics the basic structure or parts of the basic structure of the hydrocarbon backbone of homopolymers and copolymers of propylene and of ethylene. This portion, therefore, tends to be compatible with such polymers, especially copolymers of both propylene and ethylene. The polar portion tends to have an affinity for the silicate platelets of the clay material. Consequently, the organic compound enhances the compatibility with such polymers of the exfoliated, clay material that results when melt blending, with sufficient shear to exfoliate the intercalated clay material, the polymers and the clay material intercalated with the intercalant compound.

The invention further concerns a nanocomposite comprising an alpha-olefin polymer material and dispersed in the matrix thereof an exfoliated, clay material that before exfoliation had been intercalated with at least one intercalant compound of formula (Ib), as described above. The alpha-olefin polymer material is a polymer of one or more C₂-C₁₀ alpha-olefins, and is preferably selected from the group consisting of ethylene homopolymer, propylene homopolymer, and copolymers of propylene and ethylene. Another object of the present invention is a compound as described in claim 1.

### DETAILED DESCRIPTION OF THE INVENTION

In a preferred embodiment of the intercalant compound of formula (Ib), according to the present invention, R¹ is H; R² is X, NR₂ or NHR·HX, where R and X have the meanings reported above, and n is 2 or 3. According to a most preferred embodiment, R² is Br or I, or NR₂, wherein one R group is H and the other R group is a linear or branched C₁-C₄ alkyl, and preferably n-butyl; or R² is NHR·HX, wherein R is n-butyl and X is Cl.
Examples of C₁-C₄ alkyl are methyl, ethyl, n-propyl, isopropyl, n-butyl, sec-butyl and tert-butyl.

Examples of a monovalent metal cation include cations of alkali metals of Group 1A of the Periodic Table of the Elements (e.g., Li, Na, K and Rb).

The compounds of formula (Ib) and (Ia) may be obtained according to procedures known in the art, e.g. by condensing isoprene anionically with a C₁-C₄ alkyllithium to form an oligomer of 3-18 isoprenoid units, with C₁-C₄ alkyl being a substituent of a methyl carbon of the end isopropyl group of the unsaturated hydrocarbon backbone, and with lithium being an ionically attached to the methylene carbon at the other end of the backbone. The oligomer is reacted with either ethylene oxide or carbon dioxide, and then with water, to replace the lithium ion with a hydroxyethyl group or a carboxyl group. In either case the resulting compound is hydrogenated over a Pt or Rh catalyst to saturate the backbone. The hydrogenation reaction is typically done at 35 to 40°C in hexane, for 8-12 hours. The saturated, hydroxyethyl substituted compound is halogenated with a hydrogen halide (hydrogen bromide or iodide being preferred because of the ease of reaction) to form a compound of formula (Ib) or (Ia) in which R² is X. This halide compound is reacted with (1) an alkali metal cyanide to obtain a compound in which R² is CN, and (2) ammonia (or ammonium hydroxide), or a mono- or di(C₁-C₄alkyl)amine to obtain a compound in which R² is NR₂. The latter compound is reacted with a hydrogen halide to obtain a compound in which R² is NR₂·HX. The saturated, carboxy substituted compound is reacted with (1) a C₁₋C₄ alcohol to form the compound, an ester, in which R³ is C₁-C₄ alkyl, (2) ammonia (or ammonium hydroxide), or a mono- or di(C₁-C₄ alkyl)amine to obtain a compound in which R³ is NR₂, and (3) an alkali metal base to give a compound in which R³ is a monovalent metal (alkali metal) cation. Similar to the above, the aminocarboxymethyl compound (in which R³ is NR₂) is reacted with a hydrogen halide to obtain a compound in which R³ is NR₂·HX. All of the reactions described in this paragraph are conventional type reactions, and the general conditions thereof are well known to organic chemists of ordinary skill in the art.

A highly preferred embodiment of the compound of formula (Ib), and a precursor of other embodiments of the compound is 3,7,11-trimethyldodecyl halide. A process for making the embodiment starts with 3,7,11-trimethyldodecatriene-1-ol, a naturally occurring isoprenoid known as farnesol. In the process, this compound is catalytically hydrogenated to 3,7,11-trimethyldodecan-1-ol, which in turn is halogenated. The resulting halide is reacted as above indicated with respect to the generic halide compound, to obtain the various other R² radicals. Thus, the resulting halide is reacted with a C₁-C₄ alkylamine to form C₁-C₄ alkyl (3,7,11-trimethyldodecyl) amine. This amine compound then is reacted with a hydrogen halide to form the quaternary ammonium compound 3,7,11-trimethyldodecylamine hydrohalide. This quaternary ammonium compound is a preferred compound because of its higher affinity, compared to the other, non-quaternary ammonium embodiments of the generic compound, with phyllosilicates, especially smectites.

As above stated, compounds of formula (Ib) have a general affinity for silicate platelets such as those in phyllosilicates, and general compatibility with alpha-olefin polymer materials. However, the degree of affinity for the silicate platelets varies from one specific embodiment of the compound to another, depending to a large extent on the composition of the platelets and the degree of polarity of R². Similarly, the degree of compatibility with the polymer material varies from one specific embodiment of the compound to another, depending to a large extent on the value of n in the formula. Nevertheless, in each case there is significant enhancement of the compatibility of the silicate platelets with the polymer material when the generic compound is combined with the platelets. In addition, the generic compound tends to be in melted condition at the same temperatures at which such polymer material is molten, and this has a favorable effect on compatibility when the intercalated clay particles are admixed with the polymer material in the melted condition, and under sufficient shear to exfoliate the particles.

In some embodiments of the invention, only one intercalant compound of formula (Ib) may be used to produce the intercalated clays of the present invention. In other embodiments, a mixture of two or more intercalant compounds may be used; these other embodiments are typical when the intercalant compound is made from isoprene.

Another object of the present invention is a clay material intercalated with at least one intercalant compound having formula (Ib): 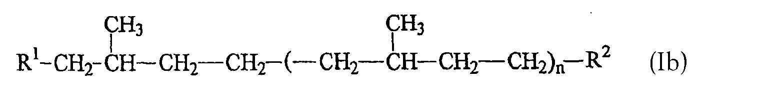 wherein R¹ is H or a linear or branched C₁-C₄ alkyl, n is 2-17, and R² is a radical with at least one polar group selected from the group consisting of X, COOR³, CN, NR₂, and NR₂·HX, wherein R³ is R, NR₂, NR₂·HX or a monovalent metal cation, the R groups, the same or different from each other, being H or a linear or branched C₁-C₄ alkyl; and X being F, Cl, Br or I.

In all embodiments of the invention, substantially all of the clay material is water swellable. In some of these embodiments the clay material comprises only one variety of water swellable clay. In other embodiments it comprises more than one such variety. These embodiments include those having clay in one group of the phyllosilicate class (for example, the smectite group), and another clay in another group of the class (for example, the vermiculite group), and embodiments in which all the clays are in one phyllosilicate group. In the more preferred embodiments, the clay or clays is or are in the smectite group. The intercalated clay material of this invention is made by preparing an aqueous solution or suspension of at least one intercalant compound of formula (Ib), admixing water swellable clay material and said solution or suspension, and, when enough of the solution or suspension has infiltrated and has been sorbed by the clay material to substantially swell the particles thereof, the thus intercalated clay material is separated from the aqueous solution or suspension and dried. Therefore, another object of the present invention is a process for making intercalated clay material, comprising the following steps:
(i) contacting a water swellable clay material with an aqueous solution or suspension of at least one intercalant compound having formula (Ib), as reported above,
(ii) allowing said clay material to become substantially swollen,
(iii) separating the thus intercalated clay material from the aqueous solution or suspension, and
(iv) drying the separated intercalated clay material.

In the preparation of an aqueous solution or suspension of the intercalant compound, the amount of intercalant compound admixed with the liquid preferably is such that the concentration of the compound in the solution or suspension is about 10-50 parts by weight of the solution or suspension. Solubility of the intercalant compound in water is dependent for the most part on the carbon chain length (i.e., the absolute or average value of n in the general formula) and to a lesser extent on the degree of polarity of the polar portion of the intercalant compound. The shorter the chain lengths (the smaller the value of n, e.g., from 2 to 10), the greater is the solubility. The more polar the polar portion, the greater is the solubility. The optimum chain length for compatibility of the intercalant compounds with an alpha-olefin polymer material appears to exist when the absolute or average value of n is 12. At the absolute or average chain length corresponding to this number, the solubility of the intercalant compound in water might only be partial. In such case a water-miscible solvent for the compound, for example, a C₁-C₄ alcohol (methanol, ethanol, and the like) can be part of the liquid medium. The concentration of the water-miscible solvent should be sufficient so that at least an easily stirrable suspension of the intercalant compound is formed when the material is admixed with the water-solvent solution. This preparation of the aqueous solution or suspension normally is carried out at 20-25°C and atmospheric pressure. However, operable higher and lower temperatures and pressures are within the broader concepts of the invention.

The relative amounts of the solution or suspension admixed with the water swellable clay material can vary. However, satisfactory results are obtained when the amounts are such that the weight ratio of intercalant compound to the clay material is about 20:100 - 40:100, and preferably about 27:100 - 32:100.

The period of time the water swellable clay material is in contact with the aqueous solution or suspension is dependent on the rate of infiltration or migration of the solution or suspension into and its sorption by the clay material. This in turn is dependent on the clay or clays that make up the clay material. Preferably, the period should be sufficient to achieve maximum or substantially maximum swelling of the clay particles. To determine the period, test runs, which can be readily done, are recommended. However, a period of time of about 1-12 hours, and preferably about 6-8 hours, gives satisfactory results.

The above steps of the preparation of the intercalated clay material are performed in conventional equipment.

A further object of the present invention concerns a nanocomposite comprising an alpha-olefin polymer material and dispersed in the matrix thereof an exfoliated clay material that before exfoliation had been intercalated with at least one intercalant compound of formula (Ib), as described above.

The alpha-olefin polymer material is a polymer of one or more C₂-C₁₀ alpha-olefins, and preferably is selected from the group consisting of ethylene and propylene homopolymers, alpha-olefin copolymers in which polymerized propylene units predominate, alpha-olefin copolymers in which polymerized ethylene units predominate, copolymers of propylene and ethylene or propylene and butene-1 in which the polymerized propylene and ethylene units or propylene and butene-1 units are substantially equal in number and together predominate, the latter copolymers of propylene and ethylene or propylene and butene-1 optionally comprising other different polymerized C₄-C₁₀ alpha-olefin units, and mixtures thereof

The concentration of the exfoliated, intercalated clay material in the nanocomposites of the invention is dependent on the desired physical properties of the articles made therefrom. However, the concentration is about 2-25% by weight with respect to the total weight of the nanocomposite, and preferably about 5-15% by weight.

While the essential components of the nanocomposites are the alpha-olefin polymer material and the exfoliated and intercalated clay material of this invention, specific embodiments of the nanocomposite include at least one other additional component. The additional component may be an antidegradant material, such as antioxidants, heat stabilizers, and the like. Other additional components may be selected from the group consisting of antacids, colorants, compatibilizers other than the intercalant compound of this invention, and the like, including other substances not here listed, but conventionally used in nanocomposites.

The nanocomposite of this invention is made by melt blending an alpha-olefin polymer material, the intercalated clay material of this invention, preferably antidegradant material, and such other components as might be involved in the embodiment being made. In this regard, one of the general embodiments of the nanocomposite is a concentrate or masterbatch, and in specific embodiments thereof one or more of such other components are not included until the concentrate and such other components are melt blended with additional alpha-olefin polymer material, to make the ultimate polymer composition for forming useful articles.

The melt blending of the alpha-olefin polymer material and the intercalated clay material of this invention is done by conventional ways and means. In doing so, the shear applied to achieve a uniform blend usually is sufficient to exfoliate the intercalated clay material and, with the aid of the intercalant compound, distribute the resulting exfoliated platelets uniformly throughout the melted alpha-olefin polymer material.

After the nanocomposite of this invention is made and still is in the molten condition, it can be used, by conventional ways and means, to manufacture useful solid articles or solid pellets for the preparation of useful articles. The nanocomposites of this invention have improved tensile strength, flexural modulus, and heat stability. They can be used to make articles of manufacture by conventional shaping processes such as melt spinning, casting, vacuum molding, sheet molding, injection molding and extruding. Examples of such articles are components for technical equipment, household equipment, sports equipment, bottles, containers, components for the electrical and electronics industries, automobile components, and fibers. They are especially useful for the preparation of extruded films and film laminates, such as films for use in food packaging.

The following examples are illustrative but not limiting of the present invention. All percentages and parts are by weight, unless otherwise expressly stated.

### Example 1

### Synthesis of 3,7,11-trimethyldodecyl bromide

A suspension of PtO₂ (45.3mg, 0.2mmol) in dry hexane (2 ml) was stirred at 20-25°C, under 0.28 MPa (40psi) of hydrogen, for 10 minutes. It was then admixed with a solution of farnesol (95%, mixture of isomers; 503mg, 2.27mmol) in hexane (1ml). The resulting mixture was stirred at 20-25°C, under 0.62 MPa (90psi) of hydrogen, for 15-16 hrs. The reaction mixture thus obtained was filtered to remove the PtO₂, and the filtrate was vacuum distilled to remove the hexane. A gas chromatography/mass spectrum analysis of the product that remains revealed full conversion of farnesol to 3,7,11-trimethyldodecan-1-ol (88.9%), 2,6,10-trimethyldodecane (10.2) and some unidentified by-products (0.9%).

To a stirred solution of hydrobromic acid (212g of 48% aqueous solution) in a one-liter round bottom flask was added concentrated sulfuric acid (36ml) at 20-25°C. After about 30 minutes, 3,7,11-trimethyldodecan-1-ol, prepared as reported above, was added dropwise to the flask while continuously stirring the flask contents. The resulting solutions was heated to bring it to a gentle boil, and refluxed for about 8 hours. It was then cooled and added to ice cold water (1 liter). The organic layer was separated and washed with cold concentrated sulfuric acid, then with a dilute (~2%) aqueous solution of sodium bicarbonate, and finally with water. The thus washed reaction product was extracted with hexane. The resulting hexane solution was washed with water, dried over anhydrous magnesium sulfate, and stripped under 50 mmHg vacuum.

The product thus obtained, as confirmed by gas chromatography/ mass spectrum analysis, consisted essentially of 3,7,11-trimethyldodecyl bromide, with a product yield of 93%.

### Example 2

### Synthesis of n-butyl (3,7,11-trimethyldodecyl) amine

130g of 3,7,11-trimethyldodecyl bromide, obtained as reported in Example 1, were dissolved in toluene (300ml) in a one-liter round bottom flask. While the toluene solution was stirred, n-butyl amine (71g) was added dropwise. The resulting solution was brought to a gentle boil, and refluxed for 6 hours. The flask content was cooled, transferred to a separatory funnel, and shaken with water (500ml). The aqueous layer was discarded. The organic layer was washed three times with water (500ml), dried over anhydrous magnesium sulfate, filtered, stripped of toluene at 50 mmHg pressure, and vacuum distilled (1 mmHg pressure) at 160-165°C, to remove residual toluene.

The product thus isolated consisted essentially of n-butyl (3,7,11-trimethyldodecyl) amine (purity higher than 99%), with a yield of 93.2%.

### Example 3

### Synthesis of n-butyl (3,7,11-trimethyldodecyl) amine hydrochloride

10g of n-butyl (3,7,11-trimethyldodecyl) amine (35.4mmol), obtained as reported in Example 2, were dissolved in anhydrous hexane (100ml), at 20-25°C. Dry hydrogen chloride gas was bubbled slowly through the resulting solution until it was saturated with hydrogen chloride, whereby solid amine hydrochloride precipitated to form a suspension. Dry nitrogen was bubbled through the suspension to remove excess hydrogen chloride. The suspension was filtered. The filtered solid was washed with anhydrous hexane, and subjected to vacuum at 20-25°C, until substantially all of the hexane was evaporated.

The solid product thus obtained (11.3g) consisted essentially of n-butyl (3,7,11-trimethyldodecyl) amine hydrochloride.

### Example 4

### Preparation of an intercalated clay material of the invention

A smectite clay (40g) was dispersed in a solution of deionized water (2000ml) and methanol (30ml). The resulting suspension was stirred at 20-25°C, for 48 hours.

19g of n-butyl (3,7,11-trimethyldodecyl) amine hydrochloride (59.46meq), prepared as reported in Example 3, were dissolved in deionized water (200ml).

The clay suspension was heated to 60°C and, while stirring the suspension vigorously, the amine hydrochloride product solution was added dropwise to it, over a period of 4 hours. The stirring of the suspension was continued at 60°C, for 8 hours. After cooling the suspension to 20-25°C, the suspension was filtered, and the filter cake was washed with deionized water, air dried, ground to break up the particle agglomerates, and finally dried in a vacuum oven at 70-80°C, for 72 hours.

The finely divided solid product (58g) thus obtained consisted of a smectite clay intercalated with the amine hydrochloride product of Example 3. The product contained 2% by weight of water, and the small angle X-ray diffraction d(001) spacing of the product was 22Å.

### Example 5

### Preparation of a nanocomposite of the invention

The alpha-olefin polymer used in this example was a commercially available heterophasic composition of ethylene and propylene, comprising an ethylene/propylene rubber (60-62% by weight of the product), and propylene homopolymer (38-40% by weight of the product), with the total content of polymerized ethylene units of 37% by weight. The product is commercially available from Basell USA Inc.

Pellets (1100g) of this heterophasic composition were dry mixed with 60g of finely divided, intercalated smectite clay, prepared as reported in Example 4, and with 2.2g of a conventional, finely divided, solid, phenolic antioxidant. The resulting mixture was fed into and extruded at 200°C from a 30mm Leistritz extruder, operated at a screw speed of 300rpm, at a feed rate of 9.1 kg (20lb) per hour, and fitted with a slender rod forming die. The extrudate, a melt blend, was cooled until solid, and then cut-up to form pellets. The pellets were dried in an air oven at 75°C.

The pelletized product was a nanocomposite comprising a copolymer of propylene and ethylene, and highly dispersed therein exfoliated smectite clay along with the amine hydrochloride product of Example 3.

Standard physical property tests were conducted on ASTM flex and tensile bars molded with a 0.14kg (5oz) Battenfeld molding machine from the pelletized product of Example 5, and from a pelletized control product the same in all respects as the Example 5 product, except it had no clay content, and it did not contain any intercalant compound in the Example 5 product. Comparison of the data obtained in the tests showed the improvements (%) in physical properties of the Example 5 product compared to the physical properties of the control product:

| | |
|---|---|
| Flexural Modulus (ASTM D-790-97) | 18.2% |
| Flexural Strength (ASTM D-790-97) | 28.7% |
| Tensile Strength (ASTM D-638-97) | 6.6% |
| Yield Elongation (ASTM D-63 8-97) | 25% |
| HDT@ 0.46MPa (66psi) (ASTM D-648-98c) | 20% |

The Notched Izod Impact (ASTM D-256-97) value of the Example 5 product was 9 ft-lb/in, with no break at 9.

### Example 6

### Preparation of a nanocomposite of the invention

1053g of a homopolymer of propylene having a melt flow rate (MFR) of 25-30g/10min (ASTM D 1238; 230°C/2.16Kg) in pellet form, commercially available from Basell USA Inc., were mixed with 79g of finely divided, intercalated smectite clay prepared as reported in Example 4, with 2.2g of a conventional, commercially available, finely divided, solid, phenolic antioxidant and with 20g pellets of a commercially available maleated homopolymer of propylene (i.e. a maleic anhydride modified polypropylene), as an additional compatibilizer; the obtained mixture was processed on a Banbury mixer at 160°C (320°F). The resulting mixture was then cooled, ground, dried, and extruded at 200°C from a 30mm Leistritz extruder, operated at a screw speed of 250rpm, at a feed rate of 6.8kg (15lb) per hour, and fitted with a slender rod forming die. The extrudate, a melt blend, was cooled until solid, and then cut-up to form pellets. The pellets, which still contained water from the clay intercalation, were dried in an air oven at 75°C.

The pelletized product was a nanocomposite comprising polypropylene and, highly dispersed therein, exfoliated smectite clay along with the amine hydrochloride product of Example 3.

Standard physical property tests were conducted on ASTM flex and tensile bars molded as described in Example 5 from the pelletized product of Example 6, and from a pelletized control product the same in all respects as the Example 6 product, except the clay was not intercalated and exfoliated, and no amine hydrochloride product of Example 3 was present. Comparison of the data obtained in the tests showed the improvements (%) in physical properties of the Example 6 product compared to the physical properties of the control product:

| | |
|---|---|
| Notched Izod Impact (ASTM D-256-97): | 12.5% |
| Flexural Modulus (ASTM D-790-97): | 22.2% |
| Flexural Strength (ASTM D-790-97): | 28.7% |
| Tensile Strength (ASTM D-638-97): | 38.1% |
| Yield Elongation (ASTM D-638-97): | 79.1% |
| HDT@ 0.46MPa (66psi) (ASTM D-648-98c): | 26.7% |

These data demonstrate the vast superiority of the nanocomposite of this example compared to an non-exfoliated clay filled composition.

Other embodiments of the invention will be readily apparent to those exercising ordinary skill after reading the disclosures of this specification. In this regard, while specific embodiments of the invention have been described in considerable detail, variations and modifications of these embodiments can be effected without departing from the spirit and scope of the invention as described and claimed.

## Claims

1. A compound having formula (Ia): 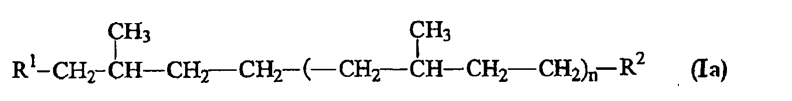 wherein R¹ is H n is 2, 3, and R² is a radical selected from the group consisting of NR₂, and NR₂·HX, wherein one R is H, and the other R is n-butyl, and X is Cl.

2. A clay material intercalated with at least one intercalant compound having formula (Ib): 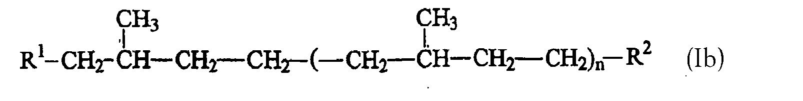 wherein R¹ is H or a linear or branched C₁-C₄ alkyl, n is 2-17, and R² is a radical selected from the group consisting of X, COOR³, CN, NR₂, and NR₂·HX, wherein R³ is R, NR₂, NR₂·HX or a monovalent metal cation, the R groups, the same or different from each other, being H or a linear or branched C₁-C₄ alkyl; and X being F, Cl, Br or I.

3. The clay material according to claim 2, wherein in formula (Ib) n is 2 or 3.

4. The clay material according to claim 2, wherein in formula (Ib) R¹ is H.

5. The clay material according to claim 2, wherein in formula (Ib) R² is NR₂·HX.

6. The clay material according to claim 5, wherein in NR₂·HX one R is H, and the other R is a linear or branched C₁-C₄ alkyl.

7. The clay material according to claim 6, wherein in NR₂·HX said other R is n-butyl and X is Cl.

8. The clay material according to claim 2, wherein the clay material is a phyllosilicate.

9. The clay material according to claim 8, wherein the phyllosilicate is a smectite.

10. A process for making an intercalated clay material, comprising the following steps:
(i) contacting a water swellable clay material with an aqueous solution or suspension of at least one compound having formula (Ib): 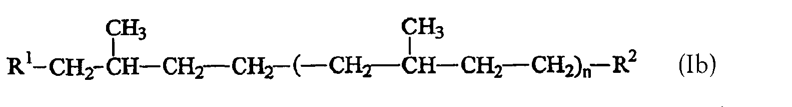 wherein R¹ is H or a linear or branched C₁-C₄ alkyl, n is 2-17, and R² is a radical selected from the group consisting of X, COOR³, CN, NR₂, and NR₂·HX, wherein R³ is R, NR₂, NR₂·HX or a monovalent metal cation, the R groups, the same or different from each other, being H or a linear or branched C₁-C₄ alkyl; and X being F, Cl, Br or I;
(ii) allowing said clay material to become substantially swollen;
(iii) separating the thus intercalated clay material from the aqueous solution or suspension, and
(iv) drying the separated intercalated clay material.

11. The process according to claim 10, wherein in formula (Ib) n is 2 or 3, and R² is NR₂·HX, wherein one R is H, the other R is a linear or branched C₁-C₄ alkyl, and X is Cl.

12. The process according to claim 10, wherein said clay material is a phyllosilicate.

13. The process according to claim 12, wherein the phyllosilicate is a smectite.

14. A nanocomposite comprising an alpha-olefin polymer material and, dispersed in the matrix of the alpha-olefin polymer material, a clay material intercalated with at least one intercalant compound having formula (Ib): 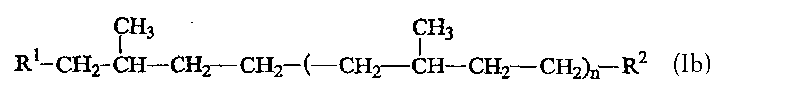 wherein R¹ is H or a linear or branched C₁-C₄ alkyl, n is 2-17, and R² is a radical selected from the group consisting of X, COOR³, CN, NR₂, and NR₂·HX, wherein R³ is R, NR₂, NR₂·HX or a monovalent metal cation, the R groups, the same or different from each other, being H or a linear or branched C₁-C₄ alkyl; and X being F, Cl, Br or I.

15. The nanocomposite according to claim 14, wherein in formula (Ib) n is 2 or 3, and R² is NR₂·HX, wherein one R is H, the other R is a linear or branched C₁-C₄ alkyl, and X is Cl.

16. The nanocomposite according to claim 14, wherein said clay material is a phyllosilicate.

17. The nanocomposite according to claim 16, wherein the phyllosilicate is a smectite.

18. The nanocomposite according to claim 14, wherein the alpha-olefin polymer material is selected from the group consisting of ethylene homopolymer, propylene homopolymer, and copolymers of propylene and ethylene.

19. A process for making a nanocomposite, comprising melt blending an alpha-olefin polymer material and a clay material intercalated with at least one intercalant compound having formula (Ib). 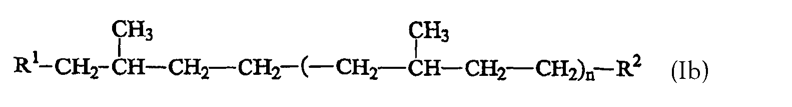 wherein R¹ is H or a linear or branched C₁-C₄ alkyl, n is 2-17, and R² is a radical selected from the group consisting of X, COOR³, CN, NR₂, and NR₂·HX, wherein R³ is R, NR₂, NR₂·HX or a monovalent metal cation, the R groups, the same or different from each other, being H or a linear or branched C₁-C₄ alkyl; and X being F, Cl, Br or I.

20. The process according to claim 19, wherein in formula (Ib) n is 2 or 3, and R² is NR₂·HX, wherein one R is H, the other R is a linear or branched C₁-C₄ alkyl, and X is Cl.

21. The process according to claim 19, wherein said clay material is a phyllosilicate.

22. The process according to claim 21 in which the phyllosilicate is a smectite.

23. The process according to claim 19, wherein the alpha-olefin polymer material is selected from the group consisting of ethylene homopolymer, propylene homopolymer, and copolymers of propylene and ethylene.

## Revendications

1. Composé répondant à la formule (Ia): 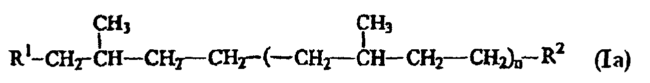 où R¹ est H et n vaut 2, 3 et R² est un radical choisi dans le groupe consistant en NR₂ et NR₂·HX où un R est H et l'autre R est un groupe n-butyle, et X est Cl.

2. Matériau d'argile intercalé avec au moins un composé intercalant répondant à la formule (Ib) : 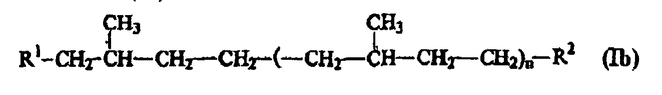 où R¹ est H ou un groupe alkyle en C₁ à C₄ linéaire ou ramifié, n vaut 2 à 17 et R² est un radical choisi dans le groupe consistant en X, COOR³, CN, NR₂, et NR₂HX, où R³ est R, NR₂, NR₂·HX ou un cation métallique monovalent, les groupes R, identiques ou différents les uns des autres, étant H ou un groupe alkyle en C₁ à C₄ linéaire ou ramifié ; et X étant F, Cl, Br ou I.

3. Matériau d'argile selon la revendication 2, dans lequel dans la formule (Ib), n vaut 2 ou 3.

4. Matériau d'argile selon la revendication 2, dans lequel dans la formule (Ib), R¹ est H.

5. Matériau d'argile selon la revendication 2, dans lequel dans la formule (Ib), R² est NR₂·HX.

6. Matériau d'argile selon la revendication 5, dans lequel NR₂·HX, un R est H et l'autre R est un groupe alkyle en C₁ à C₄ linéaire ou ramifié.

7. Matériau d'argile selon la revendication 6, dans lequel dans NR₂·HX, ledit autre R est un groupe n-butyle et X est Cl.

8. Matériau d'argile selon la revendication 2, dans lequel le matériau d'argile est un phyllosilicate.

9. Matériau d'argile selon la revendication 8, dans lequel le phyllosilicate est une smectite.

10. Procédé de production d'un matériau d'argile intercalé, comprenant les étapes suivantes consistant à :
(i) mettre en contact un matériau d'argile gonflable à l'eau avec une solution ou suspension aqueuse d'au moins un composé répondant à la formule (Ib) : 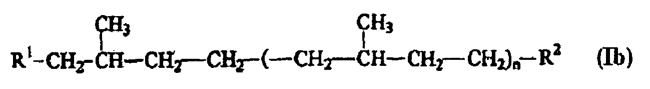 où R¹ est H ou un groupe alkyle en C₁ à C₄ linéaire ou ramifié, n vaut 2 à 17, et R² est un radical choisi dans le groupe consistant en X, COOR³, CN, NR₂, et NR₂·HX, où R³ est R, NR₂, NR₂·HX ou un cation métallique monovalent, les groupes R, identiques ou différents les uns des autres, étant H ou un groupe alkyle en C₁ à C₄ linéaire ou ramifié ; et X étant F, Cl, Br ou I ;
(ii) laisser ledit matériau d'argile devenir sensiblement gonflé ;
(iii) séparer le matériau d'argile ainsi intercalé de la solution ou suspension aqueuse, et
(iv) sécher le matériau d'argile intercalé séparé.

11. Procédé selon la revendication 10, dans lequel dans la formule (Ib), n vaut 2 ou 3 et R² est NR₂·HX, où un R est H, l'autre R est un groupe alkyle en C₁ à C₄ linéaire ou ramifié, et X est Cl.

12. Procédé selon la revendication 10, dans lequel ledit matériau d'argile est un phyllosilicate.

13. Procédé selon la revendication 12, dans lequel le phyllosilicate est une smectite.

14. Nanocomposite comprenant un matériau polymère alpha-oléfine, dispersé dans la matrice du matériau polymère alpha-oléfine, un matériau d'argile intercalé avec au moins un composé intercalant répondant à la formule (Ib) 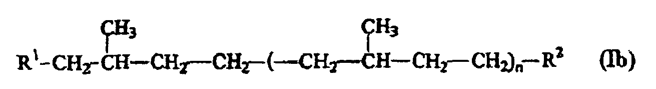 où R¹ est H ou un groupe alkyle en C₁ à C₄ linéaire ou ramifié, n vaut 2 à 17 et R² est un radical choisi dans le groupe consistant en X, COOR³, CN, NR₂, et NR₂·HX, où R³ est R, NR₂, NR₂·HX ou un cation métallique monovalent, les groupes R, identiques ou différents les uns des autres, étant un H ou un groupe alkyle en C₁ à C₄ linéaire ou ramifié ; et X étant F, Cl, Br ou I.

15. Nanocomposite selon la revendication 14, dans lequel dans la formule (Ib) n vaut 2 ou 3, et R₂ est NR₂·HX, où R est H, l'autre R est un groupe alkyle en C₁ à C₄ linéaire ou ramifié, et X est Cl.

16. Nanocomposite selon la revendication 14, dans lequel ledit matériau d'argile est un phyllosilicate.

17. Nanocomposite selon la revendication 16, dans lequel le phyllosilicate est une smectite.

18. Nanocomposite selon la revendication 14, dans lequel le matériau polymère alpha-oléfine est choisi dans le groupe consistant en un homopolymère d'éthylène, un homopolymère de propylène et les copolymères de propylène et d'éthylène.

19. Procédé de production d'un nanocomposite, comprenant le mélange en fusion d'un matériau polymère alpha-oléfine et d'un matériau d'argile intercalé avec au moins un composé intercalant répondant à la formule (Ib) 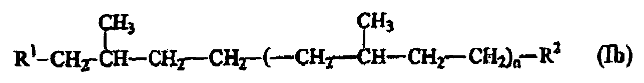 où R¹ est H ou un groupe alkyle en C₁ à C₄ linéaire ou ramifié, n vaut 2 à 17 et R² est un radical choisi dans le groupe consistant en X, COOR³, CN, NR₂, et NR₂·HX, où R³ est R, NR₂, NR₂·HX ou un cation métallique monovalent, les groupes R, identiques ou différents les uns des autres, étant H ou un groupe alkyle en C₁ à C₄ linéaire ou ramifié ; et X étant F, Cl, Br ou I.

20. Procédé selon la revendication 19, dans lequel dans la formule (Ib), n vaut 2 ou 3, et R₂ est NR₂·HX, dans lequel un R est H, et l'autre R est un groupe alkyle en C₁ à C₄ linéaire ou ramifiée, et X est Cl.

21. Procédé selon la revendication 19, dans lequel ledit matériau d'argile est un phyllosilicate.

22. Procédé selon la revendication 21, dans lequel le phyllosilicate est une smectite.

23. Procédé selon la revendication 19, dans lequel le matériau polymère alpha-oléfine est choisi dans le groupe consistant en un homopolymère d'éthylène, un homopolymère de propylène et les copolymères de propylène et d'éthylène.

## Patentansprüche

1. Verbindung der Formel (Ia): 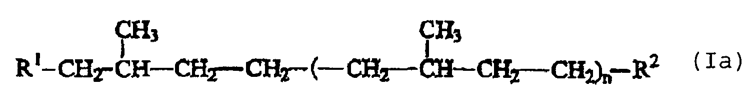 worin R¹ für H steht, n für 2 oder 3 steht und R² für einen Rest aus der Gruppe bestehend aus NR₂ und NR₂·HX, worin eine Gruppe R H bedeutet und die andere Gruppe R n-Butyl bedeutet und X Cl bedeutet, steht.

2. Mit mindestens einer interkalierenden Verbindung der Formel (Ib): 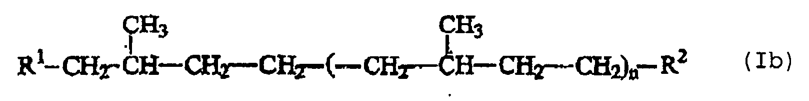 worin R¹ für H oder ein lineares oder verzweigtes C₁-C₄-Alkyl steht, n für 2-17 steht und R² für einen Rest aus der Gruppe bestehend aus X, COOR³, CN, NR₂ und NR₂·HX, worin R³ R, NR₂, NR₂·HX oder ein einwertiges Metallkation bedeutet, die Gruppen R gleich oder voneinander verschieden sind und H oder ein lineares oder verzweigtes C₁-C₄-Alkyl bedeuten und X F, Cl, Br oder I bedeutet, steht, interkaliertes Tonmaterial.

3. Tonmaterial nach Anspruch 2, bei dem in Formel (Ib) n für 2 oder 3 steht.

4. Tonmaterial nach Anspruch 2, bei dem in Formel (Ib) R¹ für H steht.

5. Tonmaterial nach Anspruch 2, bei dem in Formel (Ib) R² für NR₂·HX steht.

6. Tonmaterial nach Anspruch 5, bei dem in NR₂·HX eine Gruppe R H bedeutet und die andere Gruppe R ein lineares oder verzweigtes C₁-C₄-Alkyl bedeutet.

7. Tonmaterial nach Anspruch 6, bei dem in NR₂·HX die andere Gruppe R n-Butyl bedeutet und X Cl bedeutet.

8. Tonmaterial nach Anspruch 2, bei dem es sich bei dem Tonmaterial um ein Phyllosilicat handelt.

9. Tonmaterial nach Anspruch 8, bei dem es sich bei dem Phyllosilicat um einen Smektit handelt.

10. Verfahren zur Herstellung eines interkalierten Tonmaterials, bei dem man:
(i) ein wasserquellbares Tonmaterial mit einer wäßrigen Lösung oder Suspension mindestens einer Verbindung der Formel (Ib): 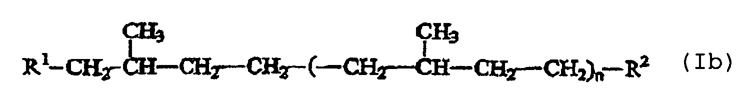 worin R¹ für H oder ein lineares oder verzweigtes C₁-C₄-Alkyl steht, n für 2-17 steht und R² für einen Rest aus der Gruppe bestehend aus X, COOR³, CN, NR₂ und NR₂·HX, worin R³ R, NR₂, NR₂·HX oder ein einwertiges Metallkation bedeutet, die Gruppen R gleich oder voneinander verschieden sind und H oder ein lineares oder verzweigtes C₁-C₄-Alkyl bedeuten und X F, Cl, Br oder I bedeutet, steht, in Berührung bringt;
(ii) das Tonmaterial in wesentlichem Maße aufquellen läßt;
(iii) das so interkalierte Tonmaterial von der wäßrigen Lösung oder Suspension abtrennt und
(iv) das abgetrennte interkalierte Tonmaterial trocknet.

11. Verfahren nach Anspruch 10, bei dem in Formel (Ib) n für 2 oder 3 steht und R² für NR₂·HX, worin eine Gruppe R H bedeutet und die andere Gruppe R ein lineares oder verzweigtes C₁-C₄-Alkyl bedeutet und X Cl bedeutet, steht.

12. Verfahren nach Anspruch 10, bei dem es sich bei dem Tonmaterial um ein Phyllosilicat handelt.

13. Verfahren nach Anspruch 12, bei dem es sich bei dem Phyllosilicat um einen Smektit handelt.

14. Nanoverbundwerkstoff, enthaltend ein alpha-Olefinpolymermaterial und in der Matrix aus dem alpha-Olefinpolymermaterial dispergiert ein mit mindestens einer interkalierenden Verbindung der Formel (Ib): 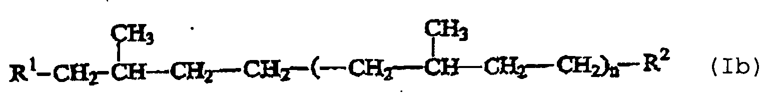 worin R¹ für H oder ein lineares oder verzweigtes C₁-C₄-Alkyl steht, n für 2-17 steht und R² für einen Rest aus der Gruppe bestehend aus X, COOR³, CN, NR₂ und NR₂·HX, worin R³ R, NR₂, NR₂·HX oder ein einwertiges Metallkation bedeutet, die Gruppen R gleich oder voneinander verschieden sind und H oder ein lineares oder verzweigtes C₁-C₄-Alkyl bedeuten und X F, Cl, Br oder I bedeutet, steht, interkaliertes Tonmaterial.

15. Nanoverbundwerkstoff nach Anspruch 14, bei dem in Formel (Ib) n für 2 oder 3 steht und R² für NR₂·HX, worin eine Gruppe R H bedeutet und die andere Gruppe R ein lineares oder verzweigtes C₁-C₄-Alkyl bedeutet und X Cl bedeutet, steht.

16. Nanoverbundwerkstoff nach Anspruch 14, bei dem es sich bei dem Tonmaterial um ein Phyllosilicat handelt.

17. Nanoverbundwerkstoff nach Anspruch 16, bei dem es sich bei dem Phyllosilicat um einen Smektit handelt.

18. Nanoverbundwerkstoff nach Anspruch 14, bei dem das alpha-Olefinpolymermaterial aus der Gruppe bestehend aus Ethylen-Homopolymer, Propylen-Homopolymer und Copolymeren von Propylen und Ethylen ausgewählt ist.

19. Verfahren zur Herstellung eines Nanoverbundwerkstoffs, bei dem man ein alpha-Olefinpolymermaterial und ein mit mindestens einer interkalierenden Verbindung der Formel (Ib): 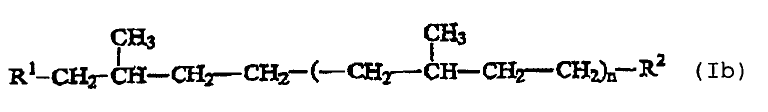 worin R¹ für H oder ein lineares oder verzweigtes C₁-C₄-Alkyl steht, n für 2-17 steht und R² für einen Rest aus der Gruppe bestehend aus X, COOR³, CN, NR₂ und NR₂·HX, worin R³ R, NR₂, NR₂·HX oder ein einwertiges Metallkation bedeutet, die Gruppen R gleich oder voneinander verschieden sind und H oder ein lineares oder verzweigtes C₁-C₄-Alkyl bedeuten und X F, Cl, Br oder I bedeutet, steht, interkaliertes Tonmaterial in der Schmelze vermischt.

20. Verfahren nach Anspruch 19, bei dem in Formel (Ib) n für 2 oder 3 steht und R² für NR₂·HX, worin eine Gruppe R H bedeutet und die andere Gruppe R ein lineares oder verzweigtes C₁-C₄-Alkyl bedeutet und X Cl bedeutet, steht.

21. Verfahren nach Anspruch 19, bei dem es sich bei dem Tonmaterial um ein Phyllosilicat handelt.

22. Verfahren nach Anspruch 21, bei dem es sich bei dem Phyllosilicat um einen Smektit handelt.

23. Verfahren nach Anspruch 19, bei dem das alpha-Olefinpolymermaterial aus der Gruppe bestehend aus Ethylen-Homopolymer, Propylen-Homopolymer und Copolymeren von Propylen und Ethylen ausgewählt ist.
